(19) Europäisches Patentamt

European Patent Office

Office européen des brevets

(11) **EP 0 800 741 B1**

(12) **FASCICULE DE BREVET EUROPEEN**

(45) Date de publication et mention
de la délivrance du brevet:
**12.09.2001 Bulletin 2001/37**

(51) Int Cl.⁷: **H04M 11/06**

(21) Numéro de dépôt: **96932650.3**

(86) Numéro de dépôt international:
**PCT/FR96/01497**

(22) Date de dépôt: **24.09.1996**

(87) Numéro de publication internationale:
**WO 97/12478 (03.04.1997 Gazette 1997/15)**

(54) **MODEM**

MODEM

MODEM

(84) Etats contractants désignés:
**AT BE CH DE DK ES FR GB GR IE IT LI LU MC NL
PT SE**

(30) Priorité: **25.09.1995 FR 9511214**

(43) Date de publication de la demande:
**15.10.1997 Bulletin 1997/42**

(73) Titulaire: **GEMPLUS
13881 Gémenos Cédex (FR)**

(72) Inventeur: **SARAT, Jean-Marc
F-83860 Nans-les-Pins (FR)**

(56) Documents cités:
**EP-A- 0 524 100**

• **IEEE TRANSACTIONS ON CONSUMER
ELECTRONICS, vol. 32, no. 3, Août 1986, NEW
YORK US, pages 609-620, XP002004516 J.J.
PLANCKE ET AL.: "Minitel and Smart Card: A
Total Synergy"**
• **FUNKSCHAU, no. 21, 6 Octobre 1989, pages
40-42, XP000067557 "INDUSTRIESTANDARDS
FUR DIE SPRACHE DER MODEMS"**

## Description

L'invention concerne les modems, c'est-à-dire les appareils de modulation et démodulation de signaux électriques qui permettent de transmettre ou recevoir des données (principalement numériques) entre un terminal et un réseau de communication. Le réseau relie au moins deux terminaux et un modem est placé entre chaque terminal et le réseau.

Les terminaux de communication constituent un domaine particulier de l'état de la technique dans lequel sont utilisés les modems. Le document « IEEE Transactions on Consumer Electronics » (vol.32, n°3, août 1986, pages 609-620, Plancke et al, « Minitel and smart card : A total synergy ») divulgue un terminal dont le microcontrôleur gère également un modem de communication ; ledit terminal étant par ailleurs relié à un lecteur de cartes à puces autonome puisque doté de son propre microcontrôleur. Le document EP 524 100 décrit quant à lui l'association autour d'un même et unique microcontrôleur, d'un terminal, d'un modem de communication et d'un lecteur de cartes à puces. Dans les deux cas, il s'agit de dispositifs capables d'accéder de manière autonome à un réseau de transmission via une fonction modem intégrée et gérée directement par le microcontrôleur du terminal considéré.

L'invention concerne elle un domaine différent puisqu'elle se rapporte aux modems proprement dit, c'est-à-dire aux dispositifs de transmission de données par modulation/démodulation. Ces derniers sont utilisés pour permettre la communication des terminaux ne disposant justement pas de moyens de communications propres.

Le plus souvent, le terminal sera un ordinateur personnel et le réseau de communication sera un réseau deb transmission téléphonique. Dans ce cas, le modem est un organe périphérique de l'ordinateur personnel, et il peut être branché entre un port de communication de l'ordinateur (en général un port de communication série) et le réseau téléphonique. Le protocole d'émission de signaux est tel que le réseau téléphonique, conçu à l'origine pour transmettre des signaux analogiques représentant la parole, puisse transmettre des signaux codés représentant des données numériques, soit en mode « caractère » (transmission d'octets représentant des caractères), soit en mode « télécopie» (transmission d'image par points).

L'invention sera donc décrite dans l'application la plus courante qui est le cas d'un ordinateur personnel (ci-après appelé PC), connecté par le modem à un réseau téléphonique.

Le modem possède deux fonctions principales :
Modulation de signaux électriques pour transformer des données binaires en signaux compatibles avec le réseau de transmission téléphonique, ceci selon un protocole bien défini qui permet de retrouver la signification de ces signaux à une autre extrémité du réseau ; et démodulation des signaux en provenance du réseau, pour les convertir en données binaires pouvant être exploitées par le PC auquel est connecté le modem.

Matériellement, le modem est constitué

- d'un circuit d'interface de ligne pour fournir et recevoir des signaux dans le protocole correspondant au réseau de transmission,
- d'un circuit d'interface avec le PC pour fournir et recevoir des signaux selon le protocole du PC,
- d'un circuit de modulation/démodulation, parfois appelé pompe de données ("Data Pump" en anglais), pour transformer les signaux de données du protocole du PC vers le protocole du réseau, à l'émission de signaux, et pour faire la transformation inverse à la réception;
- d'un microcontrôleur (c'est-à-dire un microprocesseur avec ses mémoires et notamment avec une mémoire morte de programmes), pour contrôler la communication, et en particulier pour contrôler l'action des autres circuits du modem;
- et de programmes d'instructions figés contenus dans les mémoires du microcontrôleur;

Le microcontrôleur exécute des programmes d'instructions contenues dans sa mémoire morte (programmes ou sous-programmes figés, en général directement exécutables). Il exécute ces programmes en fonction de commandes qu'il reçoit du terminal par l'intermédiaire du port de communication qui relie le terminal au modem. Ces commandes peuvent être en langage de haut niveau introduites directement au clavier du terminal et transmises sous forme ASCII au microcontrôleur. Les instructions exécutables comportent tous les éléments nécessaires à la commande des circuits de conversion des signaux dans un sens et dans l'autre (du PC vers le réseau et du réseau vers le PC) et d'autres éléments permettant la commande d'autres fonctions du modem (compression de données, correction d'erreur, passage en mode de télécopie ou en mode alphanumérique, etc.).

Actuellement, un très grand nombre de modems sont construits de manière à pouvoir être pilotés par un jeu de commandes appelé "jeu de commandes AT", ou commandes Hayes. Ces commandes permettent de contrôler en langage clair, à partir du terminal, les différentes fonctions du modem.

Le principe des commandes AT est le suivant : si le microcontrôleur du modem reçoit une commande en code ASCII qui débute par les lettres "A" et "T" et qui se termine par le code ASCII correspondant au retour chariot sur un clavier, alors le microcontrôleur considère que c'est une commande pour le modem et il exécute la commande demandée; la commande demandée est définie par une séquence de caractères ASCII introduite après la séquence préfixe 'AT' et avant le retour chariot. La commande est une commande qui correspond à une des fonctions de communication (ou liées à la communication) entre le PC et le réseau. La commande peut être suffisante à elle seule, ou alors nécessiter des paramètres et/ou des données pour être exécutée.

S'il y a des paramètres et/ou des données, ces paramètres ou données suivent la commande avant le code de retour chariot.

Par exemple, la commande peut être une commande de numérotation téléphonique pour appeler un correspondant : le nom de la commande en langage clair est 'DP' (pour "Dial Pulse"); les lettres DP sont envoyées au microcontrôleur du modem et sont suivies du numéro de téléphone demandé; un séparateur pouvant éventuellement être prévu entre la commande et le numéro . La commande 'DP' est donc toujours suivie d'une donnée. Ainsi, pour demander l'appel du numéro 40 67 11 99 à partir du clavier du PC, un utilisateur tape au clavier la séquence suivante : ATDP40671199 et termine la commande en frappant la touche de retour chariot. Le microcontrôleur du modem commande alors toutes les opérations pour que le modem envoie le signal de numérotation par impulsions sur la ligne, à destination du correspondant appelé par ce numéro. La commande serait DT (pour "Dial Tone") si le signal de numérotation envoyé sur la ligne n'était pas constitué par des séries d'impulsions en nombres correspondant aux chiffres appelés mais par des fréquences ou tonalités différentes correspondant aux chiffres appelés.

Un autre exemple de commande est "A". C'est la réponse à un appel entrant : le modem est appelé par un correspondant; si on désire qu'il réponde, c'est-à-dire qu'il entre en communication avec ce correspondant sur le réseau, on doit envoyer au microcontrôleur la séquence 'ATA' puis le retour chariot qui termine la commande.

Un autre exemple est constitué non pas par une seule commande mais par une macrocommande définissant un groupe de commandes possibles; c'est la macrocommande "+F", qui doit être suivie de la commande précisément choisie parmi le groupe. La macrocommande "+F" indique que la communication sur le réseau doit s'effectuer en mode "télécopie" et non en mode "caractère". Cette macrocommande est donc suivie d'une autre commande correspondant à une fonction demandée, elle-même suivie s'il y a lieu par des paramètres ou données nécessaires à l'exécution de la commande.

Toutes ces commandes et macrocommandes sont donc reconnues par le microcontrôleur du modem si elles commencent par la séquence 'AT', et elles déclenchent alors l'exécution par le modem de fonctions de communication entre le réseau et le PC.

On a par ailleurs déjà proposé de contrôler des appareils de communication (téléphone, ordinateurs personnels, terminaux de communication utilisant des modems) à l'aide de cartes à puces, notamment pour assurer une fonction de sécurité permettant d'interdire l'usage de ces appareils à des personnes qui ne seraient pas habilitées. Ce contrôle d'utilisation par carte à puce consiste simplement à adjoindre à l'ordinateur un périphérique supplémentaire qui est un lecteur de carte à puce, ou encore il consiste à adjoindre un tel périphérique à un terminal de communication spécialisé autre qu'un ordinateur (exemple : un ensemble modem+clavier+écran connu sous le nom de "minitel"). Le plus souvent, ce lecteur de carte à puce sert seulement à inhiber ou autoriser l'utilisation du terminal, et cette inhibition ou autorisation est établie soit directement par l'introduction d'une carte à puce soit après un dialogue entre le terminal et la carte à puce faisant intervenir l'introduction de codes secrets ou d'autres protocoles de sécurité. Les possibilités offertes aujourd'hui par cette association entre un terminal et une carte à puce sont limitées, le lecteur de carte étant pratiquement un lecteur autonome juxtaposé au terminal pour en autoriser le fonctionnement.

L'invention a pour but d'une part d'augmenter de manière significative les possibilités fonctionnelles conférées à un système de communication par la présence d'une carte à puce, d'autre part de réduire les coûts de fabrication induits par cette adjonction, et enfin de faciliter pour l'utilisateur la maîtrise simultanée de la communication avec le modem et de l'utilisation d'une carte à puce dans le cadre de cette communication.

Selon l'invention, on propose que le microcontrôleur d'un modem, microcontrôleur qui assure les fonctions principales de contrôle de la communication entre un PC et un réseau et qui répond à des commandes en provenance du PC, comporte d'une part des programmes d'instructions permettant ces fonctions principales de contrôle de communication, et d'autre part des programmes d'instructions qui contrôlent un circuit d'interface de connexion avec une carte à puce.

Ainsi, c'est le microcontrôleur du modem qui constitue également le coeur d'un lecteur de carte à puce; les commandes issues du PC pour contrôler le modem permettent de faire fonctionner le microcontrôleur en lecteur de carte à puce, pour des opérations faisant intervenir une carte à puce, ou permettent de faire fonctionner le microcontrôleur en organe de contrôle de communication avec le réseau.

Selon une définition structurelle plus détaillée, la présente invention propose un modem pour la communication de données entre un terminal et un réseau de transmission de données, le modem comportant un microcontrôleur ayant des programmes d'instructions internes permettant de gérer cette communication, ces programmes étant mis en action lorsque le terminal envoie au microcontrôleur des commandes prédéterminées, caractérisé en ce que le modem comporte en outre un logement pour recevoir une carte à puce amovible, un connecteur dans ce logement pour l'établissement de liaisons électriques avec des contacts de la carte à puce, et un circuit d'interface de carte relié entre le microcontrôleur et le connecteur pour permettre la communication entre la carte à puce et le microcontrôleur par l'intermédiaire du connecteur et du circuit d'interface de carte, le circuit d'interface de carte étant contrôlé par le microcontrôleur du modem, et le microcontrôleur comportant d'autres programmes d'instructions internes permettant de gérer la communication entre le terminal et la carte à puce sous le contrôle d'autres commandes émises par le terminal.

Le modem comporte donc les éléments mécaniques nécessaires à l'insertion d'une carte à puce, à son maintien en place, et à la connexion électrique avec des contacts spécialisés; ces contacts spécialisés sont reliés par l'intermédiaire d'un circuit d'interface de carte au microcontrôleur.

Par ailleurs, les programmes de commande issus du PC comportent à la fois des commandes de fonctionnement en modem et des commandes de fonctionnement en lecteur de carte à puce. Mais comme c'est le même microcontrôleur qui reçoit ces deux types de commande, on propose selon l'invention que les commandes qui déclenchent un fonctionnement en lecteur de carte à puce soient établies dans le même langage que celles qui commandent la communication par le modem avec le réseau; on propose notamment :

- que toutes ces commandes commencent d'abord par une même première séquence préfixe reconnue par le microcontrôleur comme définissant une commande qui est destinée au modem, le microcontrôleur comportant des moyens pour reconnaître l'arrivée de cette séquence préfixe et pour exécuter une commande qui suit cette séquence préfixe;

- et que toutes les commandes de communication avec la carte à puce se poursuivent, après la première séquence préfixe, par une deuxième séquence préfixe suivant immédiatement la première et suivie par une commande proprement dite, le microcontrôleur comportant des moyens pour reconnaître cette deuxième séquence préfixe et pour exécuter alors ladite commande qui est une commande de communication entre le terminal et la carte.

Dans l'exemple standard des modems fonctionnant avec des commandes AT, la première séquence préfixe est la commande 'AT'; la deuxième séquence préfixe peut être la commande '+G'. Par conséquent, toutes les instructions de communication avec la carte à puce commencent par la séquence spécifique 'AT+G'.

Dans toute la description qui suit, les séquences représentant les commandes sont écrites en caractères alphanumériques (lettres, chiffres et autres symboles classiques ASCII) et placées entre guillemets. Elles correspondent véritablement à ce que l'utilisateur doit taper sur le clavier si les commandes sont introduites sur le clavier. Les signaux électriques qui leur correspondent et qui sont envoyés au microcontrôleur sont des suites binaires correspondant à la transcription ASCII de ces caractères alphanumériques et symboles.

Les instructions précisément destinées à la communication avec la carte sont exécutées par le microcontrôleur dès lors qu'il reçoit et reconnait la commande 'AT+G' en préfixe de ces instructions.

La carte à puce peut être utilisée pour assurer une autorisation de fonctionnement du PC ou du modem, mais aussi pour assurer l'authentification d'un abonné à partir d'une autorité de contrôle raccordée au réseau : par exemple, si l'accès à une base de données connectée au réseau est contrôlé par un serveur, celui-ci peut procéder à des interrogations d'authentification dans lesquelles la carte à puce joue un rôle principal. C'est le cas également pour valider des transactions à distance avec la carte à puce.

D'autres caractéristiques et avantages de l'invention apparaîtront à la lecture de la description détaillée qui suit et qui est faite en référence aux dessins annexés dans lesquels :

- la figure 1 représente une configuration classique de PC raccordé à un réseau par un modem;
- la figure 2 représente la structure générale du modem;
- la figure 3 représente la structure du modem modifié selon l'invention;
- la figure 4 représente un détail de la figure 3.

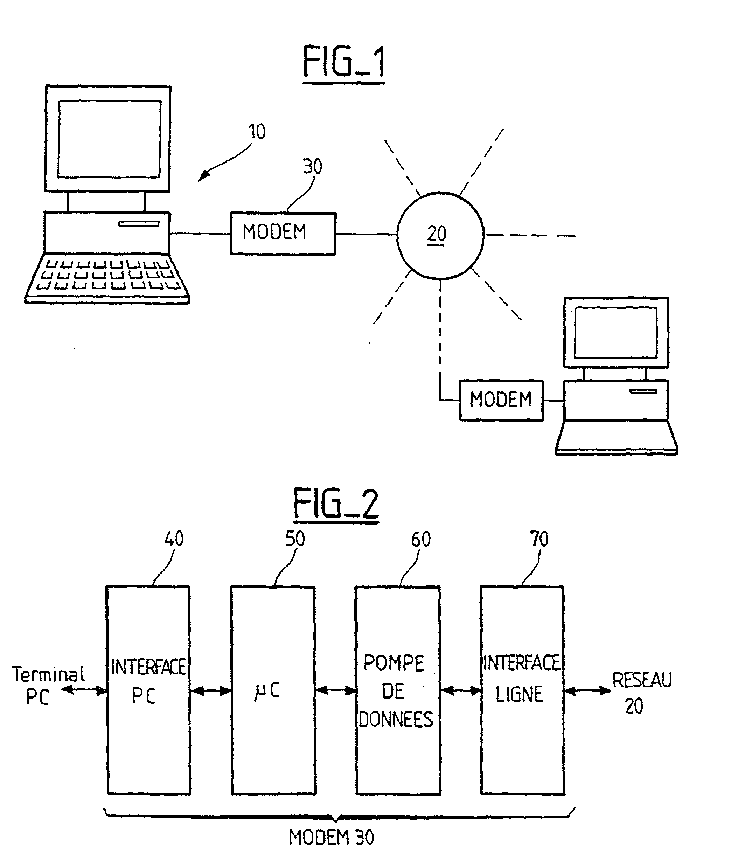

La figure 1 représente un terminal 10, qui est de préférence un ordinateur personnel (PC) avec son clavier et son écran, raccordé à un réseau de communication 20 qui peut être simplement le réseau téléphonique. Un modem 30 est classiquement interposé entre le PC et le réseau pour assurer que les données à transmettre par le PC au réseau soient conformes à une norme acceptable pour ce réseau. D'autres terminaux sont disposés aux autres points d'entrée-sortie du réseau et un modem est à chaque fois interposé entre le terminal et le réseau. Une communication peut ainsi être établie entre deux PC.

Le modem peut faire partie du PC; il constitue en général alors une carte périphérique spécialisée dans le PC; ou il peut être dans un boîtier séparé de l'ordinateur, relié à un port de communication série du PC.

Les fonctions diverses du modem sont établies par un microcontrôleur qui constitue le coeur intelligent du modem. Ce microcontrôleur comprend un microprocesseur (capable de recevoir et exécuter des jeux d'instructions) et des mémoires, et notamment au moins une mémoire de programmes qui comporte des programmes ou sous-programmes d'instructions pour le microprocesseur. Les différents programmes correspondent aux différentes fonctions de communication aller ou retour que peut remplir le modem : routines d'établissement de communications (appel, numérotation, réponse automatique, etc.), procédures de correction d'erreurs, de redondance, de compression de données, de fonctionnement en mode télécopie, etc.

Ces programmes et sous-programmes placés dans les mémoires du microcontrôleur constituent ce qu'on appelle le "firmware" du modem, c'est-à-dire le logiciel figé incorporé au matériel.

Ces programmes intégrés sont activés sous la commande du PC. Celui-ci fournit à cet effet au microcontrôleur des commandes (au sens informatique du terme), c'est-à-dire des ordres de déroulement de sous-programmes exécutables, commandes qui peuvent soit être entrées directement au clavier du PC par l'utilisateur, soit être fournies par les mémoires du PC. Le microcontrôleur interprète ces commandes reçues en principe sous forme ASCII, et les exécute en déroulant le ou les programmes appropriés.

Dans la pratique, presque tous les modems fonctionnent avec des commandes dites commandes AT ou commandes Hayes. Chaque commande comporte une séquence de quelques caractères du clavier et toutes les séquences commencent par la suite de deux caractères consécutifs qui sont le caractère 'A' et le caractère 'T'. La commande est terminée par le caractère représentant le "retour chariot" ou "entrée" sur un clavier classique. Dès lors que le microcontrôleur du modem reçoit la succession 'AT', il sait que la commande lui est destinée, il l'enregistre et attend la fin (retour chariot) pour l'exécuter.

Comme expliqué précédemment, si la séquence 'AT' est suivie par la séquence '+F', le microcontrôleur sait qu'il doit configurer le modem en mode "télécopie" et les programmes d'instructions qu'il exécutera correspondront à un protocole de transmission de télécopie. Certains modems ne disposent pas de ce mode "télécopie".

La figure 2 représente la configuration schématique classique d'un modem, avec un circuit 40 d'interface de communication avec le PC (en général un circuit d'interface de communication série), un microcontrôleur 50, un processeur de signal spécialisé 60 constituant la pompe de données ("Data Pump" en anglais), c'est-à-dire le circuit de modulation/démodulation proprement dit contrôlé par le microcontrôleur, et un circuit 70 d'interface de ligne (interface de communication série) raccordé au réseau.

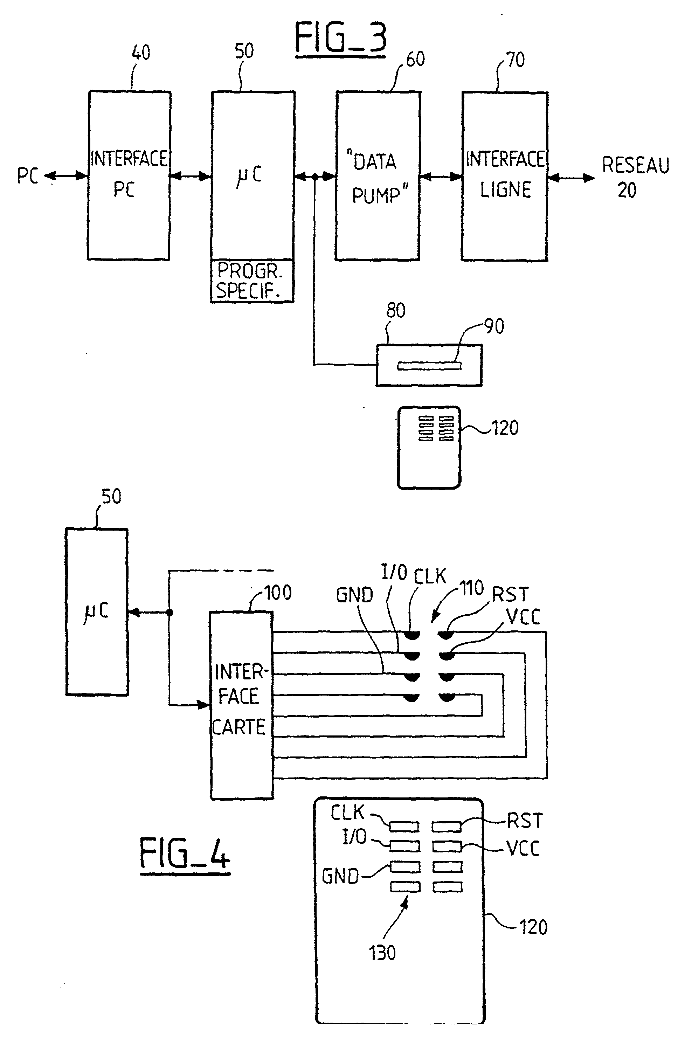

La figure 3 représente schématiquement la configuration d'un modem selon l'invention.

Le modem comporte les mêmes éléments qu'à la figure 2, et en outre les éléments matériels propres à constituer un lecteur de carte à puce, mais le coeur de ce lecteur est non pas un microcontrôleur spécifique programmé comme un lecteur de carte, mais c'est le microcontrôleur 50 du modem, qui comprend un logiciel intégré (firmware) approprié pour permettre la communication entre la carte et le PC. Les éléments additionnels rajoutés par rapport à la figure 2 sont, outre des programmes spécifiques supplémentaires du firmware du mcirocontrôleur, un logement 80 de réception de carte à puce avec une fente d'insertion 90, un connecteur dans cette fente, et un circuit d'interface de carte contrôlable par le microcontrôleur.

La figure 4 représente schématiquement l'interface de carte 100, le connecteur 110 et la carte 120 avec des contacts 130 qui peuvent venir en regard du connecteur 110 lorsque la carte est insérée dans son logement.

Pour faciliter l'utilisation de la carte à puce en association avec le modem, on prévoit non seulement que c'est le même microprocesseur qui forme le coeur du modem et le coeur du lecteur de carte, mais on prévoit aussi que les commandes en provenance du PC pour communiquer avec la carte forment un sous-ensemble des commandes du modem. Autrement dit, dans le cas typique où les commandes du modem commencent obligatoirement par la séquence 'AT', on prévoit que les commandes de communication avec la carte à puce commencent aussi obligatoirement par la séquence 'AT'.

Pour que le microcontrôleur détermine qu'il s'agit d'une commande de communication avec la carte, on prévoit de préférence que toute commande de communication avec la carte commence par la séquence 'AT+G' et se termine par un caractère ASCII correspondant au retour chariot. La suite de la séquence, avant le retour chariot, définit précisément la commande demandée.

On comprend donc que le modem de l'invention est pourvu de programmes internes tels que :

- son microcontrôleur réagit à une séquence de deux caractères 'AT' pour considérer comme une commande la séquence qui suit;
- le même microcontrôleur réagit à une séquence de quatre caractères 'AT+G' pour considérer comme une commande de communication avec la carte à puce la séquence qui suit jusqu'au prochain caractère de retour de chariot;

Les commandes de communication avec la carte peuvent être diverses.

Les principes généraux adoptés pour les commandes de communication avec la carte à puce sont de préférence les suivants (outre le principe général de commencement de toute séquence par la séquence 'AT+G' et le principe général de fin par un caractère de retour chariot) :

- les commandes sont acceptées en majuscules ou en minuscules; le microcontrôleur interprète donc identiquement un caractère ASCII correspondant à un caractère alphabétique en minuscule et le caractère ASCII correspondant au même caractère alphabétique en majuscule;
- la séquence 'AT+G' est cependant d'un seul type;
- l'interprétation de la commande ne commence qu'après le retour chariot;
- les commandes pour la carte ne peuvent pas être chaînées : une commande n'est acceptée que si la précédente a été totalement exécutée et si la réponse éventuelle a été transmise; au contraire, les commandes de fonctionnement du modem pour la communication avec le réseau peuvent être chaînées;

- le nombre de caractères contenus dans une ligne de commande ne doit pas dépasser 256;

- la commande proprement dite peut être accompagnée de paramètres obligatoires ou facultatifs permettant son exécution;

- le signe égal '=' est un séparateur qui indique la présence de paramètres asociés à la commande; il est placé après la commande proprement dite; s'il y a plusieurs paramètres, ils sont séparés par une virgule (','); un paramètre peut être constitué par un ou plusieurs octets sans séparateur;

- les octets de commande reçus par le microcontrôleur sont exprimés en hexadécimal et constitués chacun par deux caractères ASCII; ils peuvent être introduits sur le clavier du PC et transmis tels quels au microcontrôleur.

Les commandes de communication avec la carte appellent normalement des réponses. Le format des réponses envoyées par le modem au terminal dans le cas d'une communication avec la carte à puce est le suivant

- les réponses cartes sont d'un seul type (étendu) et ne peuvent pas être supprimées;

- chaque réponse commence et se termine par un retour de chariot suivi par la séquence 'LF';

- une réponse peut être constituée d'un ou plusieurs paramètres séparés par une virgule ',';

- la réponse 'ERROR' est renvoyée si la commande comporte une erreur de syntaxe ou si un ou plusieurs paramètres sont erronés.

**Jeu de Commandes**

On va donner maintenant quelques commandes principales qui peuvent être utilisées pour faire fonctionner le modem selon l'invention pour sa fonction de communication avec une carte à puce, et on va donner également les réponses associées. Les commandes entre le PC et le réseau sont des commandes Hayes classiques.

1. Mise sous tension et Reset

Pour la mise sous tension d'une carte à puce et reset (réinitialisation) de cette dernière, la commande 'AT+GON' est envoyée; elle est suivie d'un paramètre T1 (valeur entre 0 et 255) définissant le délai d'attente d'insertion de la carte. La commande est : 'AT+GON=T1'

La réponse envoyée par le microcontrôleur du modem vers le terminal est composée de la séquence 'TS' suivie d'au plus 32 caractères. Ces caractères peuvent être les paramètres suivants : T0 (caractère de format), TAi, TBi, TCi,TDi (caractère d'interface), T1, T2 ... Tk (caractères d'historique), TCK (caractère de contrôle).

2. Reset à chaud de la carte

La réinitialisation à chaud (sans coupure de tension) est commandée par la séquence 'AT+GWR'.

La réponse est la même que pour la mise sous tension.

3. Envoi de commande de dialogue

Sans entrer dans le détail des protocoles de communication entre un lecteur de carte et une carte, on rappelle que les normes ISO7816 prévoient des commandes de dialogue entre lecteur et carte; ces commandes sont regroupées sous l'appellation APDU. Par analogie, on crée ici un préfixe de commande 'AT+GPDU' qui, envoyé par le terminal vers le microcontrôleur du modem, indiquera qu'une commande de type APDU doit être envoyée à la carte. La commande précisément envoyée obéira aux règles suivantes après la séquence préfixe 'AT+GPDU' et avant le retour de chariot :

- la commande comprend un en-tête et un corps;

- l'en-tête comprend des valeurs successives CLA, INS, P1, P2, représentées chacune par un octet (deux caractères ASSCII) ; chaque valeur est comprise entre 0 et 255; CLA est la classe d'instruction; INS est le code de l'instruction, P1 et P2 sont des paramètres;

- le corps de l'instruction comprend trois champs : Lc, Data, Le. Le champ Lc contient le nombre de mots présent dans le champ 'data'; data est le champ de données proprement dit à transmettre; "Le" est le nombre de mots attendus dans la réponse.

A titre d'exemple, l'instruction :

'AT+GPDU=0X,DA,02,A0,2,6D,6C,0,0'

est une demande d'écriture (instruction data accept DA) à l'adresse 02A0, d'un champ de deux octets (2) comprenant les caractères 6D et 6C.

La réponse est composée d'un corps facultatif qui est un champ de données représentant un nombre de mots reçus, et d'une terminaison obligatoire comprenant deux octets SW1, SW2 appelés "command processing status" et "command processing qualifier"; ces deux octets représentent le fait que la commande est correcte et qu'il n'y a pas d'erreur sur les données.

Outre une demande d'écriture (DA), d'autres commandes de type APDU sont possibles, par exemple une demande de lecture d'une zone de la carte, une demande de calcul de signature par la carte, etc.

### 4. Identification

La commande est une interrogation sur le type de carte insérée. La commande est 'AT+GI'. Elle n'est pas suivie de paramètres.

La réponse est un groupe de deux octets R1, R2 représentant le type de coupleur et le type de carte respectivement.

### 5. Mise hors tension

La mise hors tension s'effectue par la commande 'AT+GOFF", sans paramètre. La réponse est l'octet R1 définissant le type de coupleur.

### 6. Configuration

La configuration des registres de la carte peut être commandée par le terminal. La commande est 'AT+GSR' suivie de paramètres S1, S2, S3 qui définissent les registres à activer. (commande "set register"). La réponse est un suite d'octets confirmant cette activation.

On ainsi défini les principales commandes qui peuvent être émises par le terminal à l'intention du microcontrôleur du modem et qui sont comprises comme des instructions de communication avec une carte à puce insérée dans la fente d'insertion associée au modem.

Le circuit d'interface de carte 100 qui est contrôlé par le microcontrôleur lors de la réception de ces commandes est constitué d'une manière classique (c'est à dire comme dans un lecteur de carte à puce classique), de manière à établir des signaux selon un protocole classique de communication entre une carte et son lecteur. On peut se référer aux normes ISO 7816 pour le format de ces signaux et donc pour la constitution du circuit d'interface. Le connecteur de carte à puce comprend en général 6 ou 8 contacts parmi lesquels au moins les contacts suivants : CLK (horloge), I/O données), RST (reset), VCC (alimentation), et GND (masse). Ces contacts sont rappelés sur la figure 4.

Dans une application à la sécurité locale d'utilisation du modem, c'est le PC qui gère cette sécurité, l'accès au modem étant autorisé sous réserve que le PC ait constaté qu'une carte à puce a été introduite dans le modem et que le code secret correspondant à cette carte a été introduit au clavier par l'utilisateur.

Dans ce cas, la procédure peut être la suivante : le programme de sécurité du PC demande à l'utilisateur d'introduire une carte à puce dans le modem et envoie par exemple une instruction du type 'AT+GON' au microcontrôleur du modem; lorsque la carte est présente, elle envoie une réponse (dans un protocole de communication entre lecteur et carte) et cette réponse est renvoyée du microcontrôleur au PC (dans le protocole du PC); le PC demande à l'utilisateur d'entrer son code secret au clavier; il envoie ce code à la carte par une instruction commençant par 'AT+G'; la carte vérifie ce code et renvoie une réponse d'acceptation ou de refus; le microcontrôleur du modem renvoie cette acceptation ou ce refus, et le PC autorise ou non l'utilisation de son périphérique "modem" pour des fonctions de communication avec le réseau, en fonction de cette acceptation ou ce refus.

Dans une autre application, la carte à puce sert à autoriser un accès où des transactions avec un correspondant du réseau. Il ne s'agit donc pas là d'une utilisation de sécurité en mode local mais en mode éloigné.

Par exemple, le PC sert à accéder à une base de données en ligne gérée par un serveur, l'accès étant autorisé sous réserve que l'utilisateur soit bien un abonné autorisé, muni à cet effet d'une carte à puce et d'un code secret qu'il est seul à détenir. La carte à puce est alors de préférence une carte comportant des algorithmes de calcul de réponse faisant intervenir au moins une clé secrète contenue dans la carte.

Le PC établit la liaison avec le réseau par des commandes 'AT' envoyées au modem (mais pas des commandes 'AT+G'). Le serveur de la base de données engage une procédure de contrôle consistant à demander au PC de fournir une réponse à une donnée aléatoire. La réponse correcte ne peut être envoyée que si l'utilisateur du PC fait intervenir à la fois l'aléa, une clé secrète contenue dans la carte et un code secret possédé par l'utilisateur. La réponse correcte peut par ailleurs être calculée du côté du serveur qui connaît ses abonnés et donc connaît les clés secrètes, les codes secrets et l'aléa qu'il envoie. Une comparaison des réponses par le serveur autorisera l'accès à la base de données.

Dans ce cas, après que le PC a reçu un aléa de la part du serveur, il engage par des commandes de type 'AT+G' un dialogue avec la carte; le PC envoie l'aléa au microcontrôleur du modem; celui-ci l'envoie à la carte dans le protocole de communication de la carte; il fait de même pour un code secret que le PC demande à l'utilisateur d'entrer; la carte calcule une réponse, la transmet au microcontrôleur du modem qui la transmet à son tour au PC; puis, le PC l'envoie sur le réseau par une commande de type 'AT' non suivie du préfixe '+G'. Le serveur contrôle alors l'exactitude de la réponse et autorise ou non l'accès à la base de données.

La procédure serait similaire pour effectuer une transaction validée par le fait qu'une réponse exacte est fournie par la carte en réponse à un aléa.

Du fait que c'est le même microprocesseur qui contrôle la communication avec le réseau et la communication avec la carte, on peut envisager que le microcontrôleur réponde directement à une commande spécifique en provenance du réseau (et non du PC) pour transmettre directement à la carte l'aléa, ou faire d'autres opérations de communication avec la carte sans passer par le PC. Par exemple, si les procédures utilisant la carte ne nécessitent pas d'introduction de code secret au clavier, on peut envisager de telles opérations directes, qui sont facilitées par le fait que c'est le même microcontrôleur qui contrôle à la fois le modem et la carte à puce.

On a ainsi décrit une structure nouvelle de modem qui offre plus de possibilités que dans l'art antérieur, qui est moins coûteuse, et qui est plus pratique pour l'utilisateur puisque la syntaxe de communication peut être sensiblement la même pour le modem et pour la carte.

Parmi les applications possibles, on peut citer:

- paiement à distance par carte bancaire; vente par correspondance;
- accès sécurisé des réseaux d'entreprise aux réseaux extérieurs tels que le réseau "Internet";
- services de banque à domicile contrôlé par carte; virements de compte à compte; achats ou ventes de valeurs financières;
- porte-monnaie électronique;
- connexion automatique sécurisée vers des bases de données, ou vers des serveurs d'assistance logicielle fournissant des mises à jour de logiciels, des dépannages à distance, etc.

## Revendications

1. Modem (30) pour la communication de données entre un terminal (10) et un réseau de transmission de données (20), le modem (30) comportant un microcontrôleur (50) et des programmes d'instructions internes permettant de gérer cette communication, ces programmes étant mis en action lorsque le terminal (10) envoie au microcontrôleur (50) des commandes prédéterminées, **caractérisé en ce que** le modem (30) comporte en outre un logement (80) pour recevoir une carte à puce amovible (120), un connecteur (110) dans ce logement (80) pour l'établissement de liaisons électriques avec des contacts de la carte à puce (120), et un circuit d'interface de carte (100) relié entre le microcontrôleur (50) et le connecteur (110) pour permettre la communication entre la carte à puce (120) et le microcontrôleur (50) par l'intermédiaire du connecteur (110) et du circuit d'interface de carte (100), le circuit d'interface de carte (100) étant contrôlé par le microcontrôleur (50) du modem (30), et le microcontrôleur (50) comportant d'autres programmes d'instructions internes permettant de gérer la communication entre le terminal (10) et la carte à puce (120) sous le contrôle d'autres commandes émises par le terminal (10).

2. Modem (30) selon la revendication 1, **caractérisé en ce que** toutes les commandes destinées au microcontrôleur (50) du modem (30) comportent une première séquence préfixe prédéterminée ('AT'), le microcontrôleur (50) comportant des moyens pour reconnaître l'arrivée de cette séquence et pour exécuter une commande suivant cette séquence préfixe.

3. Modem (30) selon la revendication 2, **caractérisé en ce que** toutes les commandes de communication entre le terminal (10) et la carte (120) comportent une deuxième séquence préfixe prédéterminée ('+G') suivant immédiatement la première séquence préfixe ('AT'), le microcontrôleur (50) comportant des moyens pour reconnaître l'arrivée de cette deuxième séquence et pour exécuter une commande suivant ces deux séquences.

4. Modem selon la revendication 2, **caractérisé en ce que** la première séquence préfixe est définie par les caractères 'AT' et la deuxième par les caractères '+G'.

## Patentansprüche

1. Modem (30) für die Kommunikation von Daten zwischen einem Terminal (10) und einem Datenübertragungsnetz (20), wobei der Modem (30) eine Mikrosteuerung (50) und interne Befehlsprogramme für die Verwaltung dieser Kommunikation umfasst, wobei diese Programme aktiviert werden, wenn das Terminal (10) vorgegebene Befehle an die Mikrosteuerung (50) sendet, **dadurch gekennzeichnet, dass** der Modem (30) des weiteren eine Aufnahme (80) für eine herausnehmbare Chipkarte (120), einen Steckverbinder (110) in dieser Aufnahme (80) für die Herstellung von elektrischen Verbindungen mit Kontakten der Chipkarte (120) sowie eine Karten-Interface-Schaltung (100) zwischen der Mikrosteuerung (50) und dem Steckverbinder (110) umfasst, um die Kommunikation zwischen der Chipkarte (120) und der Mikrosteuerung (50) über den Steckverbinder (110) und die Karten-Interface-Schaltung (100) zu ermöglichen, wobei die Karten-Interface-Schaltung (100) von der Mikrosteuerung (50) des Modems (30) gesteuert wird, und wobei die Mikrosteuerung (50) weitere interne Befehlsprogramme umfasst, um die Kommunikation zwischen dem Terminal (10) und der Chipkarte (120) unter der Steuerung anderer vom Terminal (10) ausgegebener Befehle zu verwalten.

2. Modem (30) nach Anspruch 1, **dadurch gekennzeichnet, dass** alle an die Mikrosteuerung (50) des Modems (30) gerichteten Befehle eine erste vorgegebene Kennbegriffsequenz (‚AT') beinhalten, wobei die Mikrosteuerung (50) Mittel umfasst, um das Eintreffen dieser Sequenz zu erkennen und um gemäss dieser Kennbegriffsequenz einen Befehl auszuführen.

**3.** Modem (30) nach Anspruch 2, **dadurch gekennzeichnet, dass** alle Kommunikationsbefehle zwischen dem Terminal (10) und der Karte (120) eine zweite vorgegebene Kennbegriffsequenz (,+G') beinhalten, die unmittelbar auf die erste Kennbegriffsequenz (,AT') folgt, wobei die Mikrosteuerung Mittel umfasst, um das Eintreffen dieser zweiten Sequenz zu erkennen und um gemäss diesen beiden Sequenzen einen Befehl auszuführen.

**4.** Modem nach Anspruch 2, **dadurch gekennzeichnet, dass** die erste Kennbegriffsequenz durch die Zeichen ,AT' und die zweite durch die Zeichen ,+G' definiert werden.

**Claims**

**1.** A modem (30) for data communication between a terminal (10) and a data transmission network (20), the modem (30) having a microcontroller (50) and internal instruction programs making it possible to control this communication, these programs being activated when the terminal (10) sends predetermined commands to the microcontroller (50), **characterised in that** the modem (30) also has a housing (80) for receiving a removable chip card (120), a connector (110) in this housing (80) for establishing electrical connections with contacts on the chip card (120), and a card interface circuit (100) connected between the microcontroller (50) and the connector (110) for allowing communication between the chip card (120) and the microcontroller (50) by means of the connector (110) and the card interface circuit (100), the card interface circuit (100) being controlled by the microcontroller (50) of the modem (30), and the microcontroller (50) having other internal instruction programs making it possible to control the communication between the terminal (10) and the chip card (120) under the control of other commands issued by the terminal (10).

**2.** A modem (30) according to Claim 1, **characterised in that** all the commands intended for the microcontroller (50) of the modem (30) have a first predetermined prefix sequence ('AT'), the microcontroller (50) having means for recognizing the arrival of this sequence and for executing a command according to this prefix sequence.

**3.** A modem (30) according to Claim 2, **characterised in that** all the communication commands between the terminal (10) and the card (120) have a second predetermined prefix sequence ('+G') immediately following the first prefix sequence ('AT'), the microcontroller (50) having means for recognizing the arrival of this second sequence and for executing a command according to these two sequences.

**4.** A modem according to Claim 2, **characterised in that** the first prefix sequence is defined by the characters 'AT' and the second by the characters '+G'.

# FIG_1

# FIG_2

Terminal PC — INTERFACE PC (40) — µC (50) — POMPE DE DONNEES (60) — INTERFACE LIGNE (70) — RESEAU 20

MODEM 30

## FIG_3

## FIG_4